# EUROPEAN PATENT SPECIFICATION

(11) **EP 3 369 978 B1**
(45) Date of publication and mention of the grant of the patent: **16.06.2021**
(21) Application number: 16860005.4
(22) Date of filing: 28.10.2016
(51) Int. Cl.: F16L 11/08, B32B 1/08, B32B 5/12, B32B 5/26, B32B 7/00, B32B 25/10

(54) **HIGH-PRESSURE HOSE**
HOCHDRUCKSCHLAUCH
TUYAU HAUTE-PRESSION

(30) Priority: 30.10.2015 JP 2015215171
(43) Date of publication of application: 05.09.2018
(73) Proprietor: Bridgestone Corporation, Tokyo 104-8340 (JP)
(72) Inventor: YAMATO, Nobuyoshi, Tokyo 104-8340 (JP); SEKI, Wataru, Tokyo 104-8340 (JP); MIYAWAKI, Akira, Tokyo 104-8340 (JP); SHIRAKI, Kazuhiro, Tokyo 104-8340 (JP); SUZUKI, Tatsuya, Tokyo 104-8340 (JP); KIDO, Yasumasa, Tokyo 104-8340 (JP)
(74) Representative: Oxley, Robin John George
(86) International application number: PCT/JP2016/082188
(87) International publication number: WO 2017/073777

(56) References cited:
- JP-A- H11 230 429
- JP-A- 2001 235 070
- JP-A- 2011 158 054
- JP-A- 2013 151 994
- US-A- 3 729 028

## Description

### Technical Field

The present disclosure relates to a high-pressure hose that has a reinforcing layer.

### Background Art

A high-pressure hose that is used in places having large movements, such as at the arm of an excavator or a crane or the like, is disclosed in Japanese Patent Application Laid-Open (JP-A) No. 2014-185758 (hereinafter called Patent Document 1). Reference is also made to US 3729028, JP H11-230429, JP 2001-235070 and JP 2011-158054.

### SUMMARY OF INVENTION

### Technical Problem

Because the high-pressure hose that is disclosed in Patent Document 1 is bent often, a lower implant density, which expresses the, per unit surface area, number of implanted reinforcing materials that structure a reinforcing layer, is superior in terms of bendability. On the other hand, in order to improve the burst pressure, a higher implant density is good, and achieving both is extremely difficult.

The present disclosure provides a high-pressure hose that can devise an improvement in the withstanding pressure while keeping the amount of reinforcing material smaller and while taking bendability into consideration.

### Solution to Problem

A high-pressure hose of a first aspect of the present disclosure comprises, within a hose main body, four or more reinforcing layers at which linear reinforcing materials extend in spiral shapes, wherein, at two reinforcing layers that are adjacent in a hose radial direction, a pitch length of the reinforcing material at a reinforcing layer that is disposed at an outer side is shorter than a pitch length of the reinforcing material at a reinforcing layer that is disposed at an inner side, wherein given that there are n reinforcing layers, and that the pitch length λ of the innermost layer is λ1, and that the pitch length λ of the outermost layer is λn, there is a structure in which λ1 > λ2 ... > λn.

### Advantageous Effects of Invention

In accordance with the high-pressure hose relating to the present disclosure, an improvement in burst pressure can be devised more efficiently, while taking bendability into consideration.

### BRIEF DESCRIPTION OF DRAWINGS

Fig. 1 is a schematic perspective view showing, in a partially broken manner, the internal structure of a high-pressure hose that has a reverse pitch structure and relates to a present embodiment.
Fig. 2 is a schematic perspective view showing, in a partially broken manner, the internal structure of the high-pressure hose that has a sequential pitch structure.
Fig. 3 is a perspective view showing, in a partially broken manner, the internal structure of the high-pressure hose that has a uniform pitch structure.

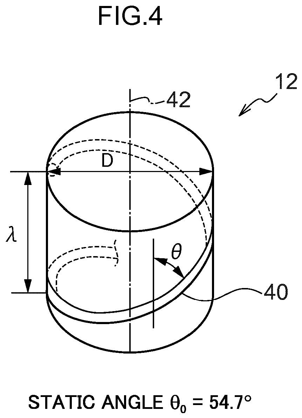

Fig. 4 is a schematic perspective view showing a state in which a single reinforcing material is wound.
Fig. 5 is a drawing in which results of evaluation tests on Examples and Comparative Examples are collected in a table.
Fig. 6 is a drawing that continues from Fig. 5 and in which results of the evaluation tests are collected in a table.
Fig. 7 is a drawing that continues from Fig. 6 and in which results of the evaluation tests are collected in a table.

### DESCRIPTION OF EMBODIMENTS

An embodiment is described hereinafter with reference to the drawings. Here, in the following description, a structure in which, in the relationship of pitch length λ of a reinforcing material that structures respective reinforcing layers, the pitch length λ of the reinforcing material at the reinforcing layer that is disposed at an outer side is set to be shorter than the pitch length λ of the reinforcing material at the reinforcing layer that is disposed at an inner side, is called a reverse pitch structure.

Namely, reverse pitch means a structure in which the pitch length λ becomes shorter from the inner side toward the outer side reinforcing layers. In contrast, description is given with a structure in which the pitch length becomes longer from the inner side toward the outer side reinforcing layers being called a sequential pitch, and a structure in which the pitch length is equal or is substantially equal from the inner side to the outer side reinforcing layers being called a uniform pitch.

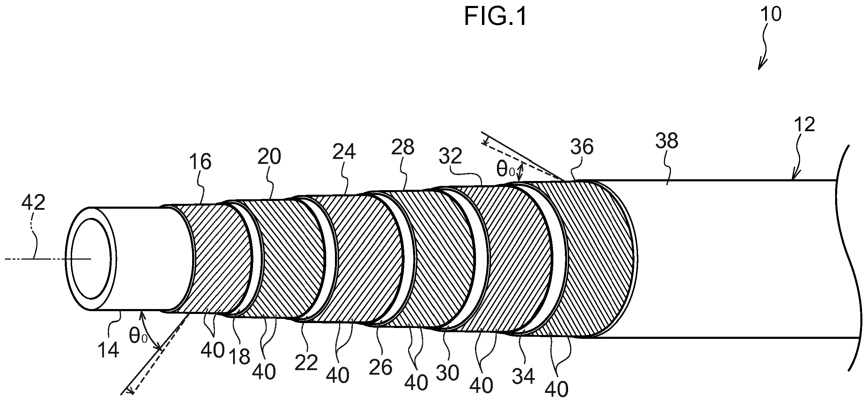

Fig. 1 is a drawing showing an example of a high-pressure hose 10 relating to the present embodiment. This high-pressure hose 10 is used at places where movements are large, such as the arm of an excavator or a crane or the like.

An inner tube rubber layer 14 that is structured by a tube-shaped rubber body is provided at the inner side of a hose main body 12 of this high-pressure hose 10, and leaking of fluid that flows therethrough is prevented. A first reinforcing layer 16 is provided at the outer side of this inner tube rubber layer 14, and the inner tube rubber layer 14 is reinforced. A first intermediate layer 18 is provided at the outer side of the first reinforcing layer 16, and a second reinforcing layer 20 is provided at the outer side of the first intermediate layer 18.

A second intermediate layer 22 is provided at the outer side of this second reinforcing layer 20, and a third reinforcing layer 24 is provided at the outer side of the second intermediate layer 22. A third intermediate layer 26 is provided at the outer side of the third reinforcing layer 24, and a fourth reinforcing layer 28 is provided at the outer side of the third intermediate layer 26.

A fourth intermediate layer 30 is provided at the outer side of this fourth reinforcing layer 28, and a fifth reinforcing layer 32 is provided at the outer side of the fourth intermediate layer 30. A fifth intermediate layer 34 is provided at the outer side of the fifth reinforcing layer 32, and a sixth reinforcing layer 36 is provided at the outer side of the fifth intermediate layer 34.

An outer covering layer 38 is provided at the outer side of the sixth reinforcing layer 36, and the outer side surface of the high-pressure hose 10 is covered by the outer covering layer 38. Due thereto, the first through sixth reinforcing layers 16, 20, 24, 28, 32, 36 are formed between the outer covering layer 38 and the inner tube rubber layer 14, and, due thereto, there are six reinforcing layers within the hose main body 12.

The respective intermediate layers 18, 22, 26, 30, 34 are structured by tube-shaped rubber bodies. In the present embodiment, description is given by using, as an example, a case in which the intermediate layers are formed of rubber, but the present invention is not limited to this, and the intermediate layers may be structured by threads or canvas for example. Further, the reinforcing layers may be layered in states of directly contacting one another, without providing these intermediate layers.

The respective reinforcing layers 16, 20, 24, 28, 32, 36 are structured by plural, linear reinforcing materials 40 whose wire diameters are equal diameters, and are structured due to the respective reinforcing materials 40 being wound in spiral forms in a state of being lined-up. Here, description is given by using, as an example, a case in which the respective reinforcing materials 40 are structured by a single wire, but the present invention is not limited to this, and, for example, the reinforcing materials 40 may be structured by combining reinforcing materials of different diameters, or by stranded wires in which plural wires are twisted together. The material is not limited to metal, and may be structured by threads or the like.

At the reinforcing layers that are adjacent to one another outwardly and inwardly, the reinforcing materials 40 are wound in directions that differ from one another around a hose axis 42, and the respective reinforcing layers 16, 20, 24, 28, 32, 36, which are disposed from the inner side toward the outer side, are set such that the winding directions differ from one another alternately. Due thereto, there is a structure in which torsion that arises in the hose main body 12 can be offset by adjacent reinforcing layers. Further, although the present embodiment describes, as an example, a case in which the reinforcing layers are structured by the six layers from the first reinforcing layer 16 to the sixth reinforcing layer 36, the present invention is not limited to this, and it suffices for there to be four or more reinforcing layers.

Given that a distance over which the reinforcing material 40, that is wound in a spiral form, advances in the direction along the hose axis 42 at the time when the reinforcing material 40 is wound once around the hose axis 42 is the pitch length λ, the reinforcing material 40 of the first reinforcing layer 16 is wound at a first pitch length λ1, and the reinforcing material 40 of the second reinforcing layer 20 is wound at a second pitch length λ2. Further, the reinforcing material 40 of the third reinforcing layer 24 is wound at a third pitch length λ3, and the reinforcing material 40 of the fourth reinforcing layer 28 is wound at a fourth pitch length λ4. Moreover, the reinforcing material of the fifth reinforcing layer 32 is wound at a fifth pitch length λ5, and the reinforcing material 40 of the sixth reinforcing layer 36 is wound at a sixth pitch length λ6 (not illustrated).

Further, as shown in Fig. 1, at two reinforcing layers that are adjacent in the hose radial direction, the pitch length λ of the reinforcing material 40 at the reinforcing layer that is disposed at the outer side is set to be shorter than the pitch length λ of the reinforcing material 40 at the reinforcing layer that is disposed at the inner side, and is structured such that λ1 > λ2 > λ3 > λ4 > λ5 > λ6.

With regard to diameters of outer sides of the respective reinforcing layers that are formed by the reinforcing materials 40 being wound in spiral forms, the first reinforcing layer 16 is set to first outer diameter dimension D1, and the second reinforcing layer 20 is set to second outer diameter dimension D2. The third reinforcing layer 24 is set to third outer diameter dimension D3, and the fourth reinforcing layer 28 is set to fourth outer diameter dimension D4. Further, the fifth reinforcing layer 32 is set to fifth outer diameter dimension D5, and the sixth reinforcing layer 36 is set to sixth outer diameter dimension D6.

Further, given that the difference between the sixth outer diameter dimension D6 of the sixth reinforcing layer 36 that structures the outermost layer and the first outer diameter dimension D1 of the first reinforcing layer 16 that structures the innermost layer is ΔD (ΔD = D6-D1), and the difference between the sixth pitch length λ6 at the sixth reinforcing layer 36 that structures the outermost layer and the first pitch length λ1 at the first reinforcing layer 16 that structures the innermost layer is Δλ (Δλ = λ1-λ6), there is a structure in which the relationship "1 ≤ Δλ/ΔD ≤ 6" is satisfied (not illustrated).

Here, if Δλ/ΔD is large, it is supposed that the warping of the inter-layer rubber due to angle variations in the reinforcing layers is large, and, if the upper limit of Δλ/ΔD exceeds 6, the balance with durability must be taken into consideration. Therefore, in the present embodiment, the upper limit of Δλ/ΔD is made to be 6. More preferably, there is a structure in which the relationship "1 ≤ Δλ/ΔD ≤ 5" is satisfied.

Note that the present embodiment describes, as an example, a case in which there are six reinforcing layers, but the number of reinforcing layers is not limited to this, and a case in which the number of reinforcing layers is n will be described. Given that there are n reinforcing layers, and that the pitch length of the innermost layer is λ1, and that the pitch length of the outermost later is λn, there is a structure in which λ1 > λ2 ... > λn. Further, given that there are n reinforcing layers, that the outer diameter dimension of the reinforcing layer that is the innermost layer is D1, that the outer diameter dimension of the outermost layer is Dn, and that Δλ = λ1-λn and ΔD = Dn-D1, there is a structure in which the relationship "1 ≤ Δλ/ΔD ≤ 6" is satisfied. More preferably, there is a structure in which "1 ≤ Δλ/ΔD ≤ 5" is satisfied.

Operation of the present embodiment relating to the above-described structure is described.
At the high-pressure hose 10 relating to the present embodiment, when a reinforcing layer at the inner side and a reinforcing layer at the outer side are compared, the reinforcing layer at the outer side has a greater outer diameter dimension D than the reinforcing layer at the inner side. However, the pitch lengths λ of the reinforcing materials 40 that structure the respective reinforcing layers are set such that the pitch length λ of the reinforcing material 40 at the reinforcing layer that is disposed at the outer side is shorter than the pitch length λ of the reinforcing material 40 at the reinforcing layer that is disposed at the inner side, and structure a so-called reverse pitch.

Because the outer diameter dimension D is small and the pitch length λ is long at the reinforcing layer that is at the inner side, an implant angle θ formed by the hose axis 42 and the reinforcing material 40 is small. On the other hand, because the outer diameter dimension D is large and the pitch length λ is short at the reinforcing layer that is at the outer side, the implant angle θ formed by the hose axis 42 and the reinforcing material 40 is large.

Here, at the time of applying internal pressure, tilting force arises in a direction in which the implant angle θ formed by the hose axis 42 and the reinforcing material 40 becomes a so-called static angle θ0 (approximately 54.7°). Therefore, as shown in Fig. 1, at the reinforcing layer at the inner side at which the internal pressure bearing rate at the time of application of internal pressure is high, because the implant angle θ of the reinforcing material 40 is small as described above, the implant angle θ formed by the reinforcing material 40 becomes large so as to approach the static angle θ0, and this reinforcing layer starts to expand in a radially expanding direction. Due thereto, the internal pressure bearing rate at the reinforcing layer at the inner side decreases. Here, the internal pressure bearing rate means the ratio at which each reinforcing layer bears the internal pressure that is applied by fluid supplied to the hose main body 12.

Further, at the reinforcing layer at the outer side at which the internal pressure bearing rate at the time of application of internal pressure is small, because the implant angle θ of the reinforcing material 40 is large as described above, the implant angle θ formed by the reinforcing material 40 becomes small so as to approach the static angle θ0, and this reinforcing layer starts to contract in a radially contracting direction. Due thereto, this reinforcing layer bears the pressure that should be allotted to the reinforcing layer at the inner side, and therefore, the internal pressure bearing rate at the reinforcing layer at the outer side increases.

In this way, at the high-pressure hose 10 relating to the present embodiment, the internal pressure bearing rate decreases at the reinforcing layer at the inner side which is apt to receive internal pressure at the time of application of internal pressure and where the internal pressure bearing rate is high. Further, the internal pressure bearing rate increases at the reinforcing layer at the outer side which is apt to receive less internal pressure at the time of application of internal pressure and where the internal pressure bearing rate is low. Therefore, equalizing the internal pressure bearing rates at the reinforcing layers at the inner side and the outer side, and improving the pressure-resistance can be devised. Due thereto, the implanted number of the reinforcing material per unit surface area can be decreased and the implant density can be lowered, while maintaining the pressure-resistance. Accordingly, an improvement in the bendability is possible.

In the present embodiment, there is described, as an example, a case in which there is a reverse pitch which is a structure in which the pitch length λ of the reinforcing material at the reinforcing layer that is disposed at the outer side is set to be shorter than the pitch length λ of the reinforcing material at the reinforcing layer that is disposed at the inner side, and the implant angle θ at the reinforcing layer at the inner side is smaller than the static angle θ0, and the implant angle θ at the reinforcing layer at the outer side is greater than the static angle θ0. Here, description will be given of a case in which there is a reverse pitch, and the implant angles θ at the reinforcing layers at the inner side and the outer side are smaller than the static angle θ0. In this case, the implant angle θ that the reinforcing material 40 forms with respect to the hose axis 42 is greater at the reinforcing layer at the outer side than at the reinforcing layer at the inner side. Therefore, the enlargement amount at the reinforcing layer at the inner side is greater, and the enlargement amount at the reinforcing layer at the outer side is small. Therefore, the internal pressure bearing rate at the reinforcing layer at the inner side, whose internal pressure bearing rate is high, can be reduced more, and the internal pressure bearing rates at the reinforcing layers at the inner side and the outer side can be equalized, and an improvement in the pressure-resistance can be devised. Here, the enlargement amount means the amount by which the coil diameter increases due to the angle θ of the reinforcing material 40 becoming larger.

Next, a case will be described in which there is a reverse pitch, and the implant angles θ at the reinforcing layers at the inner side and the outer side are larger than the static angle θ0. In this case, the implant angle θ that the reinforcing material 40 forms with respect to the hose axis 42 is greater at the reinforcing layer at the outer side than at the reinforcing layer at the inner side, and the contraction rate at the reinforcing layer at the inner side is low, and the contraction rate at the reinforcing layer at the outer side is high. Therefore, the internal pressure bearing rate at the reinforcing layer at the outer side, whose internal pressure bearing rate is low, can be increased more, and the internal pressure bearing rates at the reinforcing layers at the inner side and the outer side can be equalized, and an improvement in the pressure-resistance can be devised.

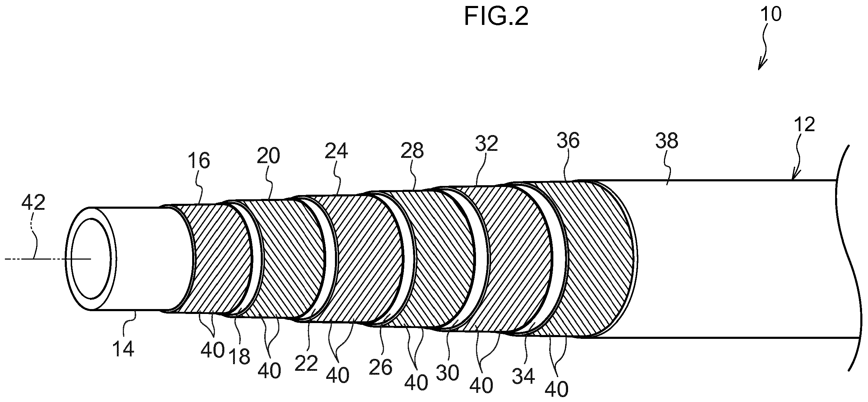

Fig. 2 is a drawing showing the high-pressure hose 10 in which the implant angles θ of the reinforcing materials 40 at the reinforcing layers at the inner side and the outer side are equal angles, and the outer diameter dimension D of the reinforcing layer is greater at the outer side than at the inner side, and therefore, there is a so-called sequential pitch in which the pitch length λ of the reinforcing material at the reinforcing layer at the outer side is longer than at the inner side. In this case, because the implant angles θ are equal at the inner side and the outer side, the reinforcing materials 40 of the respective layers tilt toward the static angle θ0, and the respective reinforcing layers start to expand or to contract. Therefore, the internal pressure bearing rate of the reinforcing layer at the inner side remains large.

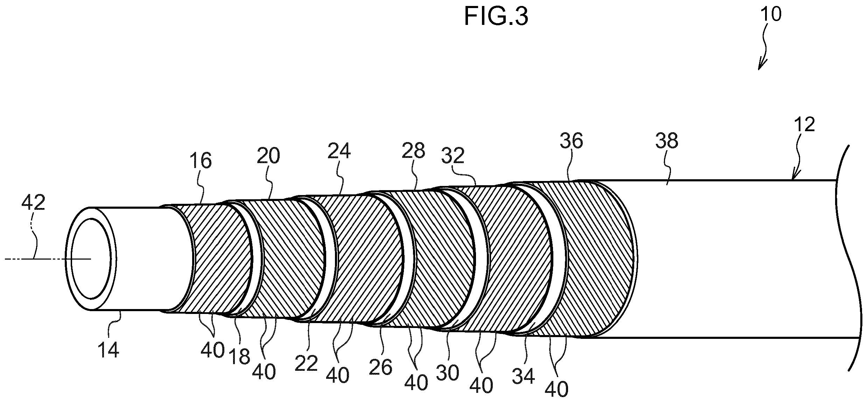

Fig. 3 is a drawing showing the high-pressure hose 10 of a so-called uniform pitch in which the pitch length λ of the reinforcing materials 40 at the reinforcing layers at the inner side and the outer side are the same dimension. In this high-pressure hose 10, because the outer diameter dimension D of the reinforcing layer is greater at the outer side than at the inner side, the implant angle θ of the reinforcing material 40 at the reinforcing layer at the outer side is greater than at the inner side. However, the difference therebetween is slight, and it cannot necessarily be said that is an ideal state.

In contrast with these, in the present embodiment, there is a structure in which the pitch lengths λ at the respective reinforcing layers gradually become smaller from the reinforcing layer at the inner side toward the reinforcing layer at the outer side. Here, at adjacent reinforcing layers, by disposing the reinforcing materials 40 of the same pitch length λ in opposite directions and making the angles of tilting of the reinforcing materials 40 be opposite directions, when the tilting forces thereof start to cancel one another out, even if the tilting forces can cancel one another out at that portion, there are cases in which, on the whole, a balance in the internal pressure burden cannot be equalized, and the pressure-resistance does not improve.

However, in the present embodiment, there is a structure in which the pitch length λ successively becomes smaller from the reinforcing layer at the inner side toward the reinforcing layer at the outer side. Therefore, a balance of the internal pressure burden can be equalized at the hose main body 12 on the whole, and an improvement in the pressure-resistance can be devised.

Further, in the present embodiment, given that the difference between the sixth outer diameter dimension D6 of the sixth reinforcing layer 36 that structures the outermost layer and the first outer diameter dimension D1 of the first reinforcing layer 16 that structures the innermost layer is ΔD, and that the difference between the sixth pitch length λ6 at the sixth reinforcing layer 36 that structures the outermost layer and the first pitch length λ1 at the first reinforcing layer 16 that structures the innermost layer is Δλ, there is a structure in which "1 ≤ Δλ/ΔD ≤ 6".

Here, if Δλ/ΔD is less than 1, the effects that are due to a reverse pitch, in which the pitch length λ of the reinforcing material 40 at the reinforcing layer at the outer side is made to be shorter than the pitch length λ of the reinforcing material 40 at the reinforcing layer at the inner side, are not that great, and the pressure-resistance is of an extent of improving slightly. Therefore, by making "1 ≤ Δλ/ΔD" as in the present application, the above-described effects that are due to a reverse pitch can be improved.

Further, if Δλ/ΔD is greater than 6, the above-described effects of the reverse pitch decrease, and it is supposed that strain of the inter-layer rubber due to angle variations of the reinforcing layers will be large, and, if the upper limit of Δλ/ΔD exceeds 6, there is the need to consider the balance with the durability. Thus, by making "1 ≤ Δλ/ΔD ≤ 6" as in the present application, the above-described effects that are due to a reverse pitch can be improved.

Namely, at the time of application of internal pressure, the reinforcing materials 40 that structure the respective reinforcing layers 16, 20, 24, 28, 32, 36 tilt, and the outer diameter dimensions D also vary. At this time, if it is made such that the outer diameter dimensions D of the respective reinforcing layers 16, 20, 24, 28, 32, 36 become the same, the internal pressure burden at the respective reinforcing layers 16, 20, 24, 28, 32, 36 becomes uniform, and therefore, the internal pressure can be borne the most efficiently at the respective reinforcing layers 16, 20, 24, 28, 32, 36.

A case in which such conditions are satisfied is calculated under the following conditions. (1) When internal pressure is applied to the hose main body 12, movement of the reinforcing material 40 is not impeded by the other reinforcing materials 40 or the intermediate layers that are adjacent thereto. (2) Elongation of the reinforcing material 40 at the time of application of internal pressure is small to the extent of being able to be ignored. (3) The reinforcing materials 40 of the respective reinforcing layers 16, 20, 24, 28, 32, 36 contact one another, and therefore, are not the same diameters, but this is ignored. (4) The implant angles θ of the respective reinforcing layers 16, 20, 24, 28, 32, 36 are about the same as the static angles θ0, and the errors thereof are ignored.

Given that a position where the reinforcing material 40 of implant angle θ1 of the first reinforcing layer 16 reaches the outer diameter dimension D1 is "a"; that a position where the reinforcing material 40 of implant angle θ6 of the sixth reinforcing layer 36 reaches the outer diameter dimension D6 is "b", with these reinforcing materials 40 starting from the same position; and that a point of intersection between a parallel line, which is parallel to the hose axis 42 and passes-through "a", and a crossing line, which is orthogonal to this parallel line and passes-through "b", is "d"; when the formula "Δλ/ΔD = πtanθ0 = π√2" is satisfied at triangle "abd", the outer diameter dimensions D at the respective reinforcing layers are the same, theoretically,.

### (Examples)

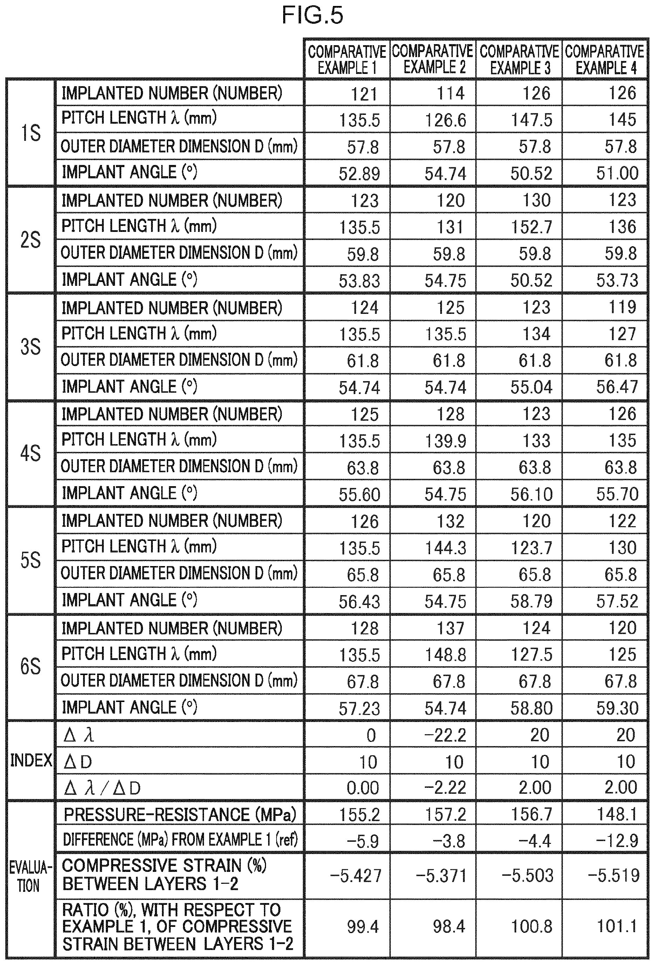

Fig. 5 through Fig. 7 show results of evaluation tests and particularly, results of pressure-resistance performance tests on high-pressure hoses of various conditions are shown. Note that the method of evaluating the pressure-resistance performance is carried out in accordance with JIS K 6330-2 (ISO 1402: the same contents as JIS K 6330-2), and the pressure-resistance up until the high-pressure hose 10 breaks was recorded.

1S through 6S in the drawings express the first reinforcing layer 16 through the sixth reinforcing layer 36, and the implanted number of the reinforcing material 40 that is used at the reinforcing layer, the pitch length λ of the reinforcing material 40, the outer diameter dimension D at each reinforcing layer and the implant angle θ are shown as the conditions of the respective reinforcing layers. Note that the other conditions including the reinforcing materials 40 are the same in the respective Comparative Examples and the respective Examples.

Further, in the index rows, the difference between the sixth pitch length λ6 at the sixth reinforcing layer 36 that structures the outermost layer and the first pitch length λ1 at the first reinforcing layer 16 that structures the innermost layer is expressed as Δλ. Further, the difference between the sixth outer diameter dimension D6 of the sixth reinforcing layer 36 that structures the outermost layer and the first outer diameter dimension D1 of the first reinforcing layer 16 that structures the innermost layer is expressed as ΔD. Further, Δλ/ΔD is shown.

In the evaluation rows, the pressure resistance until the high-pressure hose 10 breaks, the difference from the pressure-resistance in Example 1, the compressive strain between the first reinforcing layer 16 and the second reinforcing layer 20, and the ratio, with respect to Example 1, of the compressive strain between the first reinforcing layer 16 and the second reinforcing layer 20 are listed.

The Comparative Examples are listed in Fig. 5, and, in Comparative Example 1, the test results of a so-called uniform pitch, in which the pitch lengths λ of the reinforcing materials 40 at the reinforcing layers at the inner side and the outer side are the same dimension, are shown. In Comparative Example 2, the test results of a so-called sequential pitch, in which the implant angles θ of the reinforcing materials 40 at the reinforcing layers at the inner side and the outer side are equal angles, and the pitch length λ of the reinforcing material at the reinforcing layer at the outer side is longer than at the inner side, are shown.

In Comparative Example 3, there are shown the test results of the high-pressure hose 10 in which λ1 ≒ λ2 > λ3 ≒ λ4 > λ5 ≒ λ6, given that the first pitch length at the first reinforcing layer 16 is λ1, the second pitch length at the second reinforcing layer 20 is λ2, the third pitch length at the third reinforcing layer 24 is λ3, the fourth pitch length at the fourth reinforcing layer 28 is λ4, the fifth pitch length at the fifth reinforcing layer 32 is λ5, and the sixth pitch length at the sixth reinforcing layer 36 is λ6. In Comparative Example 4, rest results of the high-pressure hose 10, in which λ1 > λ2 > λ3 < λ4 > λ5 < λ6 and in which λ2 > λ4-, are shown.

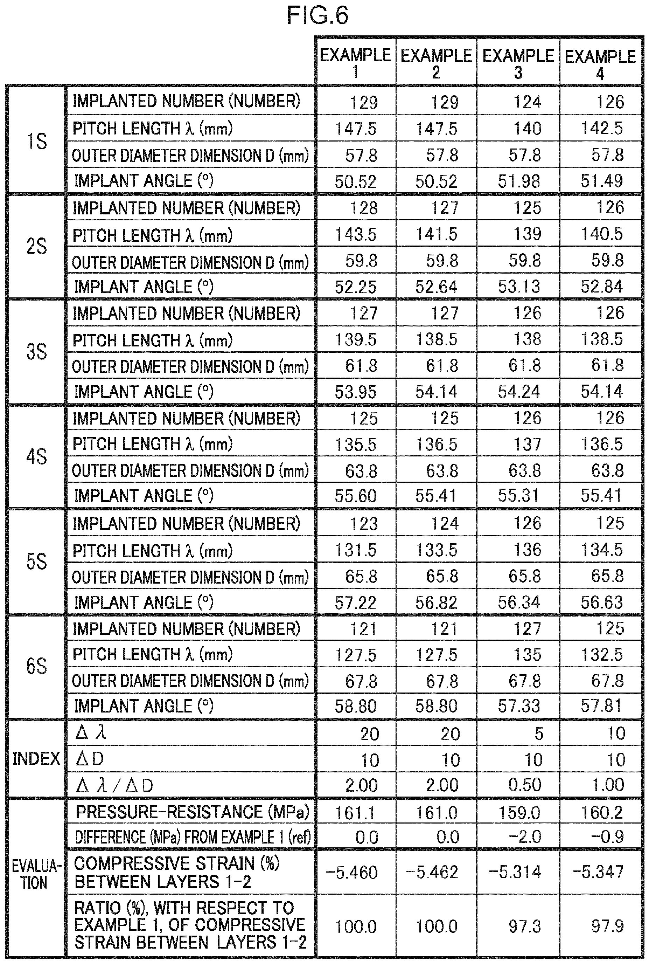

Example 1 through Example 4 are shown in Fig. 6. In Example 1, there are shown the test results of the high-pressure hose 10 that is a so-called reverse pitch in which a pitch length λ of the reinforcing material 40 at a reinforcing layer at an outer side is shorter than a pitch length λ of the reinforcing material 40 at a reinforcing layer at an inner side, and the differences (λ1-λ2, λ2-λ3 ... (λn-1)-λn) in the pitch lengths λ of adjacent reinforcing layers are substantially the same. Here, substantially the same means a value that, with the reference being the dimension in a case of decreasing at a uniform interval, is within ±5% of this dimension, and preferably within ±3%, and more preferably within ±1%.

In Example 2, test results of the high-pressure hose 10, in which a difference (λ1-λ2, λ2-λ3 ... (λn-1)-λn) in pitch lengths λ of respective reinforcing layers at an inner side and an outer side is greatest at the innermost layer side and the outermost layer side, are shown.

In Example 3, test results of the high-pressure hose 10, in which Δλ/ΔD is set to be 0.5 as compared with Example 1, are shown. In Example 4, test results of the high-pressure hose 10, in which Δλ/ΔD is set to be 1.0 as compared with Example 1, are shown.

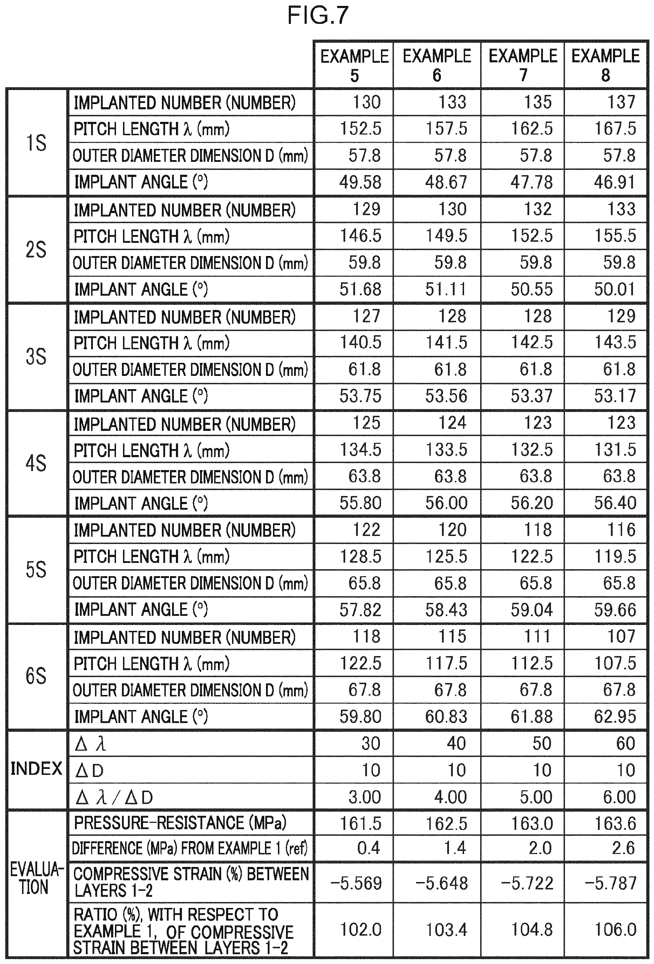

Example 5 through Example 8 are shown in Fig. 7. In Example 5, test results of the high-pressure hose 10, in which Δλ/ΔD is set to be 3 as compared with Example 1, are shown. In Example 6, test results of the high-pressure hose 10, in which Δλ/ΔD is set to be 4 as compared with Example 1, are shown. In Example 7, test results of the high-pressure hose 10, in which Δλ/ΔD is set to be 5 as compared with Example 1, are shown. In Example 8, test results of the high-pressure hose 10, in which Δλ/ΔD is set to be 6 as compared with Example 1, are shown.

From these test results, it is understood that, in all of the Examples in which the pitch length λ of the reinforcing material 40 at the reinforcing layer that is disposed at the outer side is set to be shorter than the pitch length λ of the reinforcing material 40 at the reinforcing layer that is disposed at the inner side, the pressure-resistance rises more than the respective Comparative Examples. Thereamong, the pressure-resistance of the high-pressure hose 10 of Example 8, in which Δλ/ΔD is 6, is the highest.

Comparative Example 1 is a so-called uniform pitch structure. Even in a uniform pitch structure, the angle gradually becomes larger. In the case of a uniform pitch structure, because λ is always constant, Δλ/ΔD is 0. In this case, the pressure-resistance of Example 1 is improved by as much as 5.9 MPa from Comparative Example 1.

Comparative Example 2 is a so-called sequential pitch structure. In the case of a sequential pitch structure, Δλ/ΔD is always negative. In this case as well, the pressure-resistance of Example 1 is improved by as much as 3.8 MPa from Comparative Example 1.

Comparative Example 3 is a structure in which the implant angle gradually becomes larger from the inner layer toward the outer layer, and, at the first and second reinforcing layers, the third and fourth reinforcing layers, and the fifth and sixth reinforcing layers that are pairs, the implant angle is substantially the same. Even though the implant angle becomes larger from the inner layer toward the outer layer, the pitch length λ does not necessarily become smaller gradually. In this case, the pressure-resistance falls by as much as 4.4 MPa from Example 1.

Comparative Example 4 is a structure in a case in which the pitch length λ becomes gradually smaller from the inner layer toward the outer layer, but the pitch length λ reverses at portions. In the case of such a structure, the pressure burden is not uniform, and the pressure-resistance falls by as much as 12.9 MPa from Example 1.

Further, in Example 8 in which Δλ/ΔD is 6 and the pressure-resistance of the high-pressure hose 10 is the highest, the compressive strain of the rubber at the first intermediate layer 18 that is between the first reinforcing layer 16 and the second reinforcing layer 36 is in a direction of gradually rising. Therefore, if Δλ/ΔD exceeds 6, the balance with the durability must be considered.

Accordingly, although the condition that 1 ≤ Δλ/ΔD ≤ 6 is satisfied is preferable with regard to pressure-resistance, implementing the condition that 1 ≤ Δλ/ΔD ≤ 5 is satisfied is more preferable.

Further, by making the difference in the pitch length λ between adjacent reinforcing layers be substantially the same as in Example 1, at the time when the reinforcing materials 40 of the respective reinforcing layers 16, 20, 24, 28, 32, 36 tilt at the time of application of internal pressure, and the inner side layer starts to expand and the outer side layer starts to contract, the internal pressure can be borne more uniformly among the reinforcing layers, and the pressure-resistance can be improved.

Moreover, by setting the difference in the pitch lengths λ at the reinforcing layers at the inner side and the outer side so as to be the largest at the innermost layer side and the outermost layer side as in Example 2, the pressure-resistance improves more.

Note that there does not have to be the relationship 1 ≤ Δλ/ΔD ≤ 6, where the difference between the outer diameter dimension Dn of the reinforcing layer that structures the outermost layer and the outer diameter dimension D1 of the reinforcing layer that structures the innermost layer is ΔD = Dn-D1, and the difference between the pitch length λ1 at the reinforcing layer that structures the innermost layer and the pitch length λn at the reinforcing layer that structures the outermost layer is Δλ = λ1-λn. For example, it suffices for 1 ≤ Δλ/ΔD. Moreover, the relationships of the pitch lengths λ of the respective reinforcing layers may be set such that the pitch length λ of the reinforcing material 40 at the reinforcing layer that is disposed at the outer side is shorter than the pitch length λ of the reinforcing material 40 at the reinforcing layer that is disposed at the inner side, among reinforcing layers that are adjacent.

## Claims

1. A high-pressure hose (10) comprising, within a hose main body (12), four or more reinforcing layers (16, 20, 24, 28, 32, 36) at which linear reinforcing materials (40) extend in spiral shapes, wherein, at two reinforcing layers that are adjacent in a hose radial direction, a pitch length λ of the reinforcing material (40) at a reinforcing layer that is disposed at an outer side is shorter than a pitch length λ of the reinforcing material (40) at a reinforcing layer that is disposed at an inner side,
wherein given that there are n reinforcing layers, and that the pitch length λ of the innermost layer is λ1, and that the pitch length λ of the outermost layer is λn, there is a structure in which λ1 > λ2 ... > λn.

2. The high-pressure hose (10) of Claim 1, wherein, given that a difference between a diameter at an outer side of a reinforcing layer that structures an outermost layer and a diameter at an outer side of a reinforcing layer that structures an innermost layer is ΔD, and that a difference between a pitch length λ at the reinforcing layer that structures the outermost layer and a pitch length λ at the reinforcing layer that structures the innermost layer is Δλ, 1 ≤ Δλ/ΔD is satisfied.

## Patentansprüche

1. Hochdruckschlauch (10), der, innerhalb eines Schlauch-Hauptkörpers (12), vier oder mehr Verstärkungslagen (16, 20, 24, 28, 32, 36) umfasst, an denen sich lineare Verstärkungsmaterialien (40) in spiraligen Formen erstrecken, wobei, an zwei Verstärkungslagen, die in einer Schlauchradialrichtung benachbart sind, eine Schlaglänge λ des Verstärkungsmaterials (40) an einer Verstärkungslage, die an einer äußeren Seite angeordnet ist, kürzer ist als eine Schlaglänge λ des Verstärkungsmaterials (40) an einer Verstärkungslage, die an einer inneren Seite angeordnet ist,
wobei, vorausgesetzt, dass es n Verstärkungslagen gibt und dass die Schlaglänge λ der innersten Lage λ1 ist und dass die Schlaglänge λ der äußersten Lage λn ist, es eine Struktur gibt, in der λ1 > λ2... > λn.

2. Hochdruckschlauch (10) nach Anspruch 1, wobei, vorausgesetzt, dass eine Differenz zwischen einem Durchmesser an einer äußeren Seite einer Verstärkungslage, die eine äußerste Lage strukturiert, und einem Durchmesser an einer äußeren Seite einer Verstärkungslage, die eine innerste Lage strukturiert, ΔD ist und dass eine Differenz zwischen einer Schlaglänge λ an der Verstärkungslage, welche die äußerste Lage strukturiert, und einer Schlaglänge λ an der Verstärkungslage, welche die innerste Lage strukturiert, Δλ ist, 1 ≤ Δλ/ΔD erfüllt ist.

## Revendications

1. Tuyau haute pression (10) comprenant, à l'intérieur d'un corps principal du tuyau (12) quatre ou plusieurs couches de renforcement (16, 20, 24, 28, 32, 36) au niveau desquelles des matériaux de renforcement linéaires (40) s'étendent en des formes en spirale, dans lequel, au niveau de deux couches de renforcement qui sont adjacentes dans une direction radiale du tuyau, une longueur de pas λ du matériau de renforcement (40) au niveau d'une couche de renforcement disposée au niveau d'un côté externe est plus courte qu'une longueur de pas λ du matériau de renforcement (40) au niveau d'une couche de renforcement disposée au niveau d'un côté interne ;
dans lequel, étant donné qu'il existe n couches de renforcement, et que la longueur de pas λ de la couche interne extrême correspond à λ1, et que la longueur de pas λ de la couche externe extrême correspond à λn, il existe une structure dans laquelle λ1 >λ2 ... > λn.

2. Tuyau haute pression (10) selon la revendication 1, dans lequel, étant donné qu'une différence entre un diamètre au niveau d'un côté externe d'une couche de renforcement structurant une couche externe extrême et un diamètre au niveau d'un côté externe d'une couche de renforcement structurant une couche interne extrême correspond à ΔD, et qu'une différence entre une longueur de pas λ au niveau de la couche de renforcement structurant la couche externe extrême et une longueur de pas λ au niveau de la couche de renforcement structurant la couche interne extrême correspond à Δλ, la relation de 1 ≤ Δλ/ΔD est satisfaite.
